# EUROPÄISCHE PATENTANMELDUNG

(11) **EP 1 008 966 A2**
(43) Veröffentlichungstag der Anmeldung: **14.06.2000**
(21) Anmeldenummer: 99122175.5
(22) Anmeldetag: 05.11.1999
(51) Int. Cl.: G07F 7/10, G06K 7/00

(54) **Datenaustauschsystem**

(30) Priorität: 07.12.1998 DE 19856362
(71) Anmelder: Orga Kartensysteme GmbH, 33104 Paderborn (DE)
(72) Erfinder: Schwier, Andreas, 32429 Minden (DE)

(57) **Zusammenfassung**

Beschrieben wird ein Datenaustauschsystem bestehend aus einem Dateneingabe-/Datenausgabegerät und einem tragbaren Datenträger mit einem integrierten Halbleiterbaustein, aus dem zur Durchführung von Transaktionen mittels des Dateneingabe-/Datenausgabegerätes Daten gelesen werden und in den Daten eingeschrieben werden können, wobei
- der tragbare Datenträger mindestens einem Speicherbereich aufweist, in dem das Lesen und Schreiben von Daten durch das Dateneingabe-/Datenausgabegerät nur dann erlaubt ist, wenn zuvor in einer Steuereinheit des tragbaren Datenträgers überprüft wurde, ob ein von dem Dateneingabe-/Datenausgabegerät gesendeter Zugriffscode mit einem in dem tragbaren Datenträger gespeicherten Zugriffscode übereinstimmt,
- der tragbare Datenträger mindestens einem Transaktionsspeicherbereich aufweist, in dem das Lesen von Transaktionsinformationen (T₁, T₂), die jeweils nach einer Transaktion gespeichert werden, durch das Dateneingabe-/Datenausgabegerät ohne vorherige Überprüfung des Zugriffscodes erlaubt ist.

Dabei wird
- in dem Dateneingabe-/Datenausgabegerät jeweils nach einer Transaktion mittels eines Algorithmus (f(T₁,T₂,K_{M}; DES)) in Abhängigkeit von mindestens einer Transaktionsinformation (T₁, T₂) ein neuer Zugriffscode berechnet und dieser so berechnete Zugriffscode als aktueller Zugriffsode in dem tragbaren Datenträger gespeichert,
- in dem Dateneingabe-/Datenausgabegerät jeweils vor einer Transaktion mittels des Algorithmus (f(T₁,T₂,K_{M}; DES)) in Abhängigkeit von mindestens der einen Transaktionsinformation (T₁, T₂) der Zugriffscode berechnet und dieser Zugriffscode an den tragbaren Datenträger zur Überprüfung gesendet.

## Beschreibung

Die Erfindung bezieht sich auf ein Datenaustauschsystem gemäß Oberbegriff des Patentanspruches 1.

Ein solches Datenaustauschsystem besteht aus mindestens einem Dateneingabe-/Datenausgabegerät und mindestens einem tragbaren Datenträger mit einem integrierten Halbleiterbaustein. Der tragbare Datenträger ist vorzugsweise als Chipkarte ausgebildet; das Dateneingabe-/Datenausgabegerät ist dabei dann als Chipkartenterminal ausgebildet.

Derartige Datenaustauschsysteme werden beispielsweise in Verbindung mit elektronischen Abrechnungssystemen eingesetzt, wobei der tragbare Datenträger die Funktion einer debitorischen oder kreditorischen Geldbörse übernimmt.

Zur Durchführung von Transaktionen, z.B. Bezahlvorgänge, werden dabei mittels des Dateneingabe-/Datenausgabegerätes aus dem tragbaren Datenträger Daten gelesen und in diesen eingeschrieben (gespeichert). Für diesen Zweck weist der gattungsgemäße tragbare Datenträger mindestens einen Transaktionsspeicherbereich auf, in dem jeweils nach einer Transaktion Transaktionsinformationen, wie z.B. der bezahlte Betrag und das Bezahldatum, gespeichert werden.

Der gattungsgemäße tragbare Datenträger weist mindestens einen Speicherbereich, z.B. ein Betragsfeld, in dem ein geldwerter Betrag gespeichert ist, auf, im dem das Lesen und/oder Schreiben von Daten durch das Dateneingabe-/Datenausgabegerät nur dann erlaubt ist, wein zuvor in einer Steuereinheit des tragbaren Datenträgers überprüft wurde, ob ein von dem Dateneingabe-/Datenausgabegerät gesendeter Zugriffscode mit einem in dem tragbaren Datenträger gespeicherten Zugriffscode übereinstimmt. Dagegen ist das Auslesen der Transaktionsinformationen durch das Dateneingabe-/Datenausgabegerät ohne vorherige Überprüfung des Zugriffscodes erlaubt ist.

Ein gattungsgemäßes Datenaustauschsystem ist bspw. aus der DE 28 58 819 bekannt. Ein Problem Herbei ist, daß ein Angreifer, der - z.B. durch Protokollierung der Datenübertragung zwischen dem Dateneingabe-/Datenausgabegerät und dem tragbaren Datenträger - in Besitz des Zugriffscodes gelangt ist, in der Lage ist, mit Kenntnis dieses Zugriffscodes betrügerische Transaktionen auszuführen.

Aufgabe der Erfindung ist es, ein gattungsgemäßes Datenaustauschsystem so auszubilden, daß vorstehend beschriebene betrügerische Transaktionen verhindert werden.

Diese Aufgabe wird durch die kennzeichnenden Merkmale des Patentanspruches 1 gelöst. Die sich daran anschließenden Unteransprüche enthalten vorteilhafte und förderliche Ausgestaltungen der Erfindung.

Erfindungsgemäß wird in dem Dateneingabe-/Datenausgabegerät jeweils nach einer Transaktion mittels eines Algorithmus in Abhängigkeit von mindestens einer Transaktionsinformation (Transaktionsbetrag, Transaktionsdatum) ein neuer Zugriffscode berechnet und der so berechnete Zugriffscode als aktueller Zugriffscode in dem tragbaren Datenträger gespeichert. Dabei wird dann jeweils vor einer Transaktion mittels des Algorithmus in Abhängigkeit von mindestens der einen Transaktionsinformation der Zugriffscocde berechnet und an den tragbaren Datenträger zur Überprüfung gesendet. Nur dann, wenn gesendete mit dem im tragbaren Datenträger gespeicherten Zugriffscode übereinstimmt, ist eine erneute Transaktion möglich.

Da der Zugriffscode nach jeder Transaktion geändert wird, nutzt es einem Angreifer wenig, wenn er einmalig Kenntnis von einem Zugriffscode erlangt.

Das erfindungsgemäße Datenaustauschsystem ist insbesondere bei Verwendung von intelligenten Speicherkarten als tragbare Datenträger vorteilhaft, da die erfindungsgemäße Berechnung und Überprüfung des Zugriffscodes einen zuverlässigen Ersatz für bspw. ein Challenge-Response-Authentifizierungsverfahren ist, das jedoch eine teuere Mikroprozessor-Chipkarte erfordern würde.

Anhand der beigefügten Zeichnungen soll die Erfindung nachfolgend näher erläutert werden.

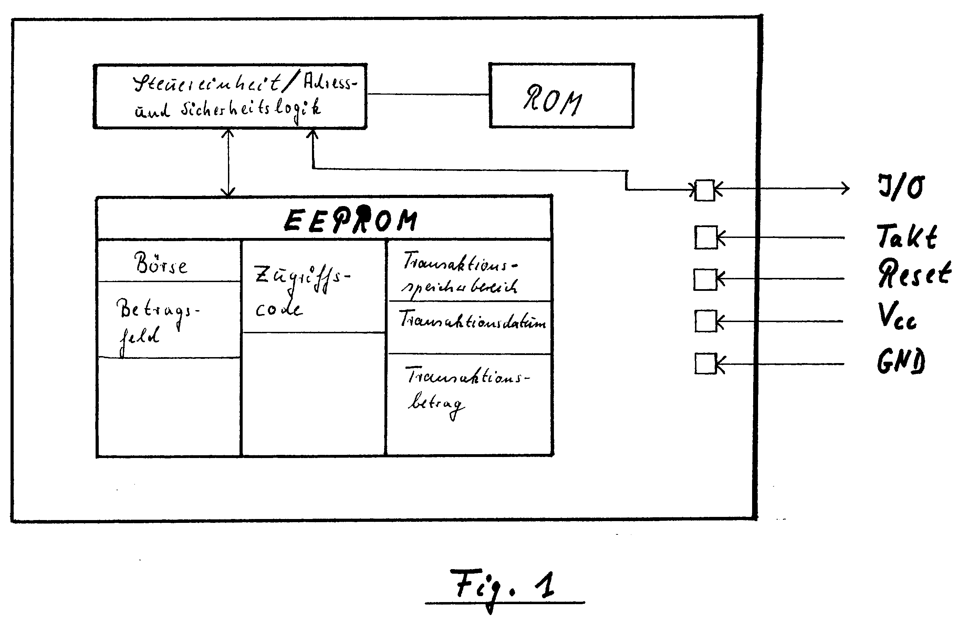

In Figur 1 ist die Architektur eines tragbaren Datenträgers, insbesondere einer Chipkarte gezeigt. Dabei handelt es sich bei der dargestellten Chipkarte um eine intelligente Speicherkarte. Diese umfaßt eine Steuereinheit mit Adress- und Sicherheitslogik sowie einen Festwertspeicher (ROM). Ferner gibt es einen nichtflüchtigen, programmierbaren Speicher (EEPROM). Dieser Speicher ist nun wiederum in verschiedene Speicherbereiche eingeteilt, wobei bspw. ein Speicherbereich für das Betragsfeld einer Geldbörse vorgesehen ist. Daneben gibt es den Transaktionsspeicher, in dem u.a. das Transaktionsdatum und der Transaktionsbetrag gespeichert sind. In einem weiteren Speicherbereich ist der jeweils Zugriffscode abgelegt. Der Datenaustausch der Chipkarte mit dem Dateneingabe-/Datenausgabegerät erfolgt über die I/O-Leitung. Die anderen Leitungen sind für die Zuführung des Taktsignals, der Versorgungsspannung, der Masse sowie eines Reset-Signals vorgesehen.

Die Berechnung des Zugriffscode im Dateneingabe-/Datenausgabegerät erfolgt - neben der Berücksichtigung der Transaktionsinformation - vorzugsweise in Abhängigkeit von mindestens einem weiteren in dem tragbaren Datenträger gespeicherten, unveränderlichen Parameter, wie z.B. eine Seriennummer (SN) oder eine Applikationskennung. Hierdurch wird ein weiteres Maß an Sicherheit erreicht.

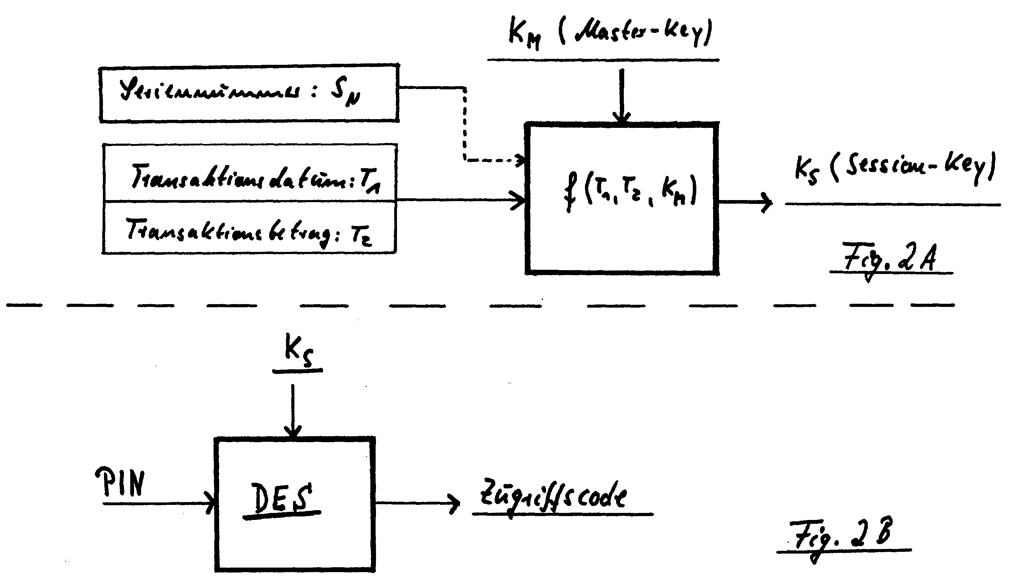

In den Figuren 2A und 2B ist die Berechnung des Zugriffscode, die vorzugsweise in zwei Schritten erfolgt, schematisch dargestellt. Dabei wird in dem Dateneingabe-/Datenausgabegerät mittels eines 1. Verschlüsselungsalgorithmus (f) in Abhängigkeit von mindestens einer Transaktionsinformation (T₁,T₂) und einem in dem Dateneingabe-/Datenausgabegerät gespeicherten Hauptschlüssel (Master-Key, K_{M}) und ggf. der Seriennummer (S_{N}) ein temporärer Schlüssel (Session-Key, K_{S}) berechnet. Anschließend wird dann mittels eines 2. Verschlüsselungsalgorithmus (z.B. der DES-Algorithmus) in Abhängigkeit von dem temporären Schlüssel (K_{S}) der Zugriffscode berechnet.

Dabei wird vorzugsweise bei der Berechnung des Zugriffscodes mittels des 2. Verschlüsselungsalgorithmus nicht nur der temporäre Schlüssel (KS), sondern auch ein vom Inhaber des Datenträgers über das Dateneingabe-/Datenausgabegerät eingebbarer Geheimcode (PIN) berücksichtigt. Hierdurch wird wiederum ein zusätzliches Maß an Sicherheit geschaffen.

Dabei ist das Datenaustauschsystem so ausgelegt, daß die PIN-Eingabe vom Datenträger-Inhaber aktiviert bzw. deaktiviert werden kann. Zu diesem Zweck ist in dem tragbaren Datenträger eine PIN-Aktivierungs-/Deaktivierungsinformation änderbar gespeichert, die über das Dateneingabe-/Datenausgabegerät eingebbar ist. Wenn der Datenträger-Inhaber den Datenträger mit PIN-Eingabe verwenden will, dann gibt er die PIN-Aktivierungsinformation ein. Dies wird dann in dem tragbaren Datenträger gespeichert. Der Inhaber wird dann solange wie er die Aktivierungsinformation nicht zurücksetzt vor jeder Transaktion aufgefordert, seine PIN einzugeben, die dann in die Berechnung des Zugriffscodes eingeht. Wenn der Datenträger-Inhaber die PIN-Eingabe nicht oder nicht mehr wünscht, so gibt der die PIN-Deaktivierungsinformation ein. Er wird dann nicht mehr aufgefordert seine PIN einzugeben. Statt der PIN wird dann bei der Berechnung des Zugriffscodes ein fester, vorbestimmter Parameter als Platzhalter berücksichtigt.

Standardmäßig ist im dem tragbaren Datenträger vor der ersten Transaktion die PIN-Aktivierungsinformation gespeichert, d.h. der Datenträger-Inhaber wird aufgefordert, seine PIN einzugeben. Mit Eingabe der richtigen PIN kann man dann auch die PIN-Deaktivierungsinformation eingeben und abspeichern.

Außerdem werden die Transaktionsinformationen vor der ersten Transaktion standardmäßig auf einen Startwert gesetzt.

Die Berechnung des Zugriffscodes im Dateneingabe-/Datenausgabegerät erfolgt vorzugsweise in einem Sicherheitsmodul, das sich in dem Dateneingabe-/Datenausgabegerät befindet. Dieses Sicherheitsmodul wird vorzugsweise von einer Mikroprozessor-Chipkarte (z.B. im sogenannten Plug-In-Format) gebildet.

## Patentansprüche

1. Datenaustauschsystem bestehend aus einem Dateneingabe-/Datenausgabegerät und einem tragbaren Datenträger mit einem integrierten Halbleiterbaustein, aus dem zur Durchführung von Transaktionen mittels des Dateneingabe-/Datenausgabegerätes Daten gelesen werden und in den Daten eingeschrieben werden können, wobei
- der tragbare Datenträger mindestens einem Speicherbereich aufweist, in dem das Lesen und/oder Schreiben von Daten durch das Dateneingabe-/Datenausgabegerät nur dann erlaubt ist, wenn zuvor in einer Steuereinheit des tragbaren Datenträgers überprüft wurde, ob ein von dem Dateneingabe-/Datenausgabegerät gesendeter Zugriffscode mit einem in dem tragbaren Datenträger gespeicherten Zugriffscode übereinstimmt,
- der tragbare Datenträger mindestens einem Transaktionsspeicherbereich aufweist, in dem das Lesen von Transaktionsinformationen (T₁, T₂), die jeweils nach einer Transaktion gespeichert werden, durch das Dateneingabe-/Datenausgabegerät ohne vorherige Überprüfung des Zugriffscodes erlaubt ist,
dadurch gekennzeichnet, daß
- in dem Dateneingabe-/Datenausgabegerät jeweils nach einer Transaktion mittels eines Algorithmus (f(T₁,T₂,K_{M}; DES)) in Abhängigkeit von mindestens einer Transaktionsinformation (T₁, T₂) ein neuer Zugriffscode berechnet wird und dieser so berechnete Zugriffscode als aktueller Zugriffsode in dem tragbaren Datenträger gespeichert wird,
- in dem Dateneingabe-/Datenausgabegerät jeweils vor einer Transaktion mittels des Algorithmus (f(T₁,T₂,K_{M}; DES)) in Abhängigkeit von mindestens der einen Transaktionsinformation (T₁, T₂) der Zugriffscode berechnet wird und dieser Zugriffscode an den tragbaren Datenträger zur Überprüfung gesendet wird.

2. Datenaustauschsystem nach Anspruch 1,
dadurch gekennzeichnet, daß
die Berechnung des Zugriffscodes in Abhängigkeit von mindestens einem weiteren in dem tragbaren Datenträger gespeicherten, unveränderlichen Parameter, wie z.B. eine Seriennummer (S_{N}) oder eine Applikationskennung, erfolgt.

3. Datenaustauschsystem nach Anspruch 1 oder 2,
dadurch gekennzeichnet, daß
in dem Dateneingabe-/Datenausgabegerät mittels eines 1. Verschlüsselungsalgorithmus (f) in Abhängigkeit von mindestens einer Transaktionsinformation (T₁, T₂) und einem in dem Dateneingabe-/Datenausgabegerät gespeicherten Hauptschlüssel (Master-Key, K_{M}) ein temporärer Schlüssel (Session-Key, K_{S}) berechnet wird, anschließend mittels eines 2. Verschlüsselungsalgorithmus (DES) in Abhängigkeit von dem temporären Schlüssel (K_{S}) der Zugriffscode berechnet wird.

4. Datenaustauschsystem nach Anspruch 3,
dadurch gekennzeichnet, daß
der Zugriffscode mittels des 2. Verschlüsselungsalgorithmus (DES) in Abhängigkeit von dem temporären Schlüssel (K_{S}) und zusätzlich in Abhängigkeit eines vom Inhaber des tragbaren Datenträgers über das Dateneingabe-/Datenausgabegerät eingegebenen Geheimcodes (PIN) berechnet wird.

5. Datenaustauschsystem nach Anspruch 4,
dadurch gekennzeichnet, daß
in dem tragbaren Datenträger eine Geheimcode-Aktivierungs-/Deaktivierungsinformation änderbar abspeicherbar ist, die über das Dateneingabe-/Datenausgabegerät eingebbar ist, wobei
- nach Eingabe der Geheimcode-Aktivierungsinformation der Karteninhaber aufgefordert wird, einen Geheimcode (PIN) einzugeben, der dann in die Berechnung des Zugriffscodes eingeht,
- nach Eingabe der Geheimcode- Deaktivierungsinformation der Zugriffscode mittels des 2. Verschlüsselungsalgorithmus in Abhängigkeit von dem temporären Schlüssel (K_{S}) und zusätzlich in Abhängigkeit von einem festen, vorbestimmten Parameter erfolgt.

6. Datenaustauschsystem nach Anspruch 5,
dadurch gekennzeichnet, daß
im dem tragbaren Datenträger standardmäßig vor der ersten Transaktion die Geheimcode-Deaktivierungsinformation gespeichert ist.

7. Datenaustauschsystem nach einem der vorstehenden Ansprüche,
dadurch gekennzeichnet, daß
in dem tragbaren Datenträger die Transaktionsinformationen (T₁, T₂) vor der ersten Transaktion standardmäßig auf einen Startwert gesetzt sind.

8. Datenaustauschsystem nach einem der vorstehenden Ansprüche,
dadurch gekennzeichnet, daß
das Dateneingabe-/Datenausgabegerät ein Sicherheitsmodul aufweist, in dem die Berechnung des Zugriffscodes erfolgt.

9. Datenaustauschsystem nach Anspruch 8,
dadurch gekennzeichnet, daß
das Sicherheitsmodul von einer Mikroprozessor-Chipkarte gebildet ist.
